# EUROPEAN PATENT SPECIFICATION

(11) **EP 4 148 556 B1**
(45) Date of publication and mention of the grant of the patent: **08.07.2026**
(21) Application number: 20938303.3
(22) Date of filing: 27.05.2020
(51) Int. Cl.: G06F 7/58

(54) **APPARATUS AND METHOD FOR GENERATING RANDOM NUMBERS**
VORRICHTUNG UND VERFAHREN ZUR ERZEUGUNG VON ZUFALLSZAHLEN
APPAREIL ET PROCÉDÉ DE GÉNÉRATION DE NOMBRES ALÉATOIRES

(43) Date of publication of application: 15.03.2023
(73) Proprietor: Yinwang Intelligent Technologies Co., Ltd., Shenzhen, Guangdong 518110 (CN)
(72) Inventor: REVADIGAR, Girish Shivalingappa, Singapore 138589 (SG); WEI, Zhuo, Singapore 138589 (SG); LI, Zhen, Shenzhen, Guangdong 518129 (CN); YIN, Xinxing, Shenzhen, Guangdong 518129 (CN)
(74) Representative: Maiwald GmbH
(86) International application number: PCT/CN2020/092729
(87) International publication number: WO 2021/237538

(56) References cited:
- CN-A- 104 317 551
- CN-A- 105 027 073
- CN-A- 108 199 829
- CN-A- 109 408 029
- US-A1- 2014 280 411
- US-A1- 2015 055 778
- US-A1- 2019 250 887
- REVADIGAR GIRISH ET AL: "On the Effectiveness of Electric Network Frequency (ENF) as a Source of Randomness", 2019 18TH IEEE INTERNATIONAL CONFERENCE ON TRUST, SECURITY AND PRIVACY IN COMPUTING AND COMMUNICATIONS/13TH IEEE INTERNATIONAL CONFERENCE ON BIG DATA SCIENCE AND ENGINEERING (TRUSTCOM/BIGDATASE), IEEE, 5 August 2019 (2019-08-05), pages 849 - 854, XP033653726, DOI: 10.1109/TRUSTCOM/BIGDATASE.2019.00123

## Description

### TECHNICAL FIELD

This application relates to the field of electronic technologies, and in particular, to a random number generation apparatus and method.

### BACKGROUND

Currently, communication can be performed between a vehicle and an external device, and between components inside the vehicle. Some communication processes require high security, and therefore need to use a proper security mechanism. Usually, most security mechanisms rely on random numbers. For example, a random number may be used as an initialization vector, a session identifier, or a basic unit for key generation and verification. The randomness of the random number may be represented by an entropy of the random number. Usually, a higher entropy of the random number indicates that a security mechanism depending on the random number is less likely to be cracked, and security of the random number is higher. Therefore, whether the random number can have a high entropy is very important for security of vehicle communication.

Usually, entropy bit data may be generated by adding a hardware entropy source to the vehicle, and a random number is generated after a specific operation is performed on the entropy bit data. An entropy of the random number mainly depends on an entropy of the entropy bit data. Therefore, currently, a high-quality hardware entropy source needs to be configured in most vehicles, which is not conducive to reducing production costs of the vehicles.

In conclusion, currently, generation of a random number in a vehicle needs to be further studied.

US 2015/055778 A1 describes a hardware-based digital random number generator (DRNG) in a processor. The DRNG includes a logically asynchronous pipeline with at least three stages: (1) entropy source; (2) entropy validation; and (3) Combined Conditioner, Deterministic Random Bit Generator (DRBG) and Nondeterministic Random Bit Generator (NRBG).

REVADIGAR GIRISH ET AL: "On the Effectiveness of Electric Network Frequency (ENF) as a Source of Randomness" investigates the suitability of a ubiquitous source of randomness produced in a power grid's electric network, called Electric Network Frequency (ENF), for building a noise source for random bit generators.

### SUMMARY

This application provides a random number generation apparatus and method, to generate a true random number and a pseudo random number without using a hardware entropy source.

According to a first aspect, an embodiment of this application provides a random number generation apparatus. The apparatus mainly includes an electric network frequency ENF extractor, an entropy generation module, and an entropy pool. An input end of the ENF extractor is connected to an electric network, an output end of the ENF extractor is connected to an input end of the entropy generation module, and an output end of the entropy generation module is connected to the entropy pool. The ENF extractor extracts an ENF signal of the electric network. The entropy generation module generates first bit data based on the ENF signal. The entropy pool receives at least one piece of input data, where the at least one piece of input data includes the first bit data; and generates a random number based on the at least one piece of input data.

The ENF signal of the electric network changes with an electricity requirement of a user in the electric network, and the electric network carries a large quantity of users. Therefore, it may be considered that an overall electricity requirement of the users in the electric network is irregular, and further, the first bit data with true randomness may be generated based on the ENF signal. In this embodiment of this application, the at least one piece of input data received by the entropy pool includes the first bit data. Therefore, the entropy pool may generate a true random number and a pseudo random number based on the first bit data. Therefore, by using the random number generation apparatus provided in this embodiment of this application, a true random number and a pseudo random number can be generated without using a hardware entropy source.

For generating a true random number, the entropy pool includes a first operational circuit, the first operational circuit is connected to the output end of the entropy generation module, and the first operational circuit generates a first random number based on the first bit data, where the first random number is a true random number. Because the first bit data has true randomness, the first operational circuit may generate the first random number with true randomness based on the first bit data.

The entropy pool further includes a deterministic random bit generator DRBG, and the DRBG is separately connected to the output end of the entropy generation module and the first operational circuit. The DRBG generates second bit data based on the first bit data. When generating the first random number, the first operational circuit performs an exclusive OR operation on the current first bit data and the second bit data, to generate the first random number, wherein the first random number is a true random number. It should be noted that the current first bit data is real-time bit data, that is, first bit data output by the DRBG when the exclusive OR operation is performed.

For generating a pseudo random number, the entropy pool may further include a storage area and an interface circuit. The DRBG may correspondingly generate at least one piece of third bit data based on the at least one piece of input data, where the at least one piece of third bit data includes the second bit data. The storage area may store the at least one piece of third bit data. After receiving a pseudo random number request message, the interface circuit may randomly read third bit data from the storage area, and output a second random number based on the randomly read third bit data, where the second random number is a pseudo random number.

For example, the storage area includes a first storage area and a second storage area. The first storage area may store third bit data that has an entropy rate greater than a first threshold, and the second storage area may store third bit data that has an entropy rate not greater than the first threshold. In this case, based on an entropy rate corresponding to the at least one piece of third bit data, the DRBG may further separately store third bit data that is in the at least one piece of third bit data and that has an entropy rate greater than the first threshold into the first storage area, and store third bit data that is in the at least one piece of third bit data and that has an entropy rate not greater than the first threshold into the second storage area.

Based on this storage manner, the pseudo random number request message may be a full-entropy pseudo random number request message or a reduced-entropy pseudo random number request message. After receiving the full-entropy pseudo random number request message, the interface circuit may randomly read the third bit data from the first storage area, and output the second random number based on the randomly read third bit data. Alternatively, after receiving the reduced entropy pseudo random number request message, the interface circuit may randomly read the third bit data from the second storage area, and output the second random number based on the randomly read third bit data.

In this embodiment of this application, the entropy generation module may include an analog-to-digital converter and a second operational circuit. The analog-to-digital converter may convert the ENF signal from an analog signal into a digital signal. The second operational circuit may perform an operation on the ENF signal that is converted into the digital signal, to obtain the first bit data.

For example, the analog-to-digital converter may perform M-bit (multi-bit) quantization processing on the ENF signal in an analog signal form, to convert the ENF signal into a digital signal form. The ENF signal in the digital signal form carries a bit stream, and the second operational circuit may perform an operation on the bit stream according to an entropy conditioning algorithm, to obtain conditioned full entropy bits, that is, the first bit data.

To further improve quality of the random number, in a possible implementation, the entropy generation module may further include a preprocessing circuit, and the preprocessing circuit is separately connected to the ENF extractor and the analog-to-digital converter. The preprocessing circuit may preprocess the ENF signal, and output the preprocessed ENF signal to the analog-to-digital converter.

By preprocessing, processing such as filtering and enhancement may be performed on the ENF signal to remove noise or a useless component from the ENF signal. For example, a random or abnormal peak pulse, a ghost signal, and the like in the ENF signal can be removed, so that quality of the first bit data can be improved.

To detect an abnormal risk in a timely manner, in a possible implementation, the preprocessing circuit may further detect signal quality of the ENF signal; and continue or stop, based on the signal quality of the ENF signal, outputting the ENF signal to the analog-to-digital converter.

Specifically, the preprocessing circuit may continuously monitor the ENF signal, to ensure that the preprocessed ENF signal output to the analog-to-digital converter has enough randomness. For example, when the electric network is powered off or the ENF extractor is abnormal (for example, faulty or powered off), or when an attacker attempts to control the ENF signal to affect random number generation, the preprocessing circuit may monitor the ENF signal to determine signal quality of the ENF signal, for example, randomness quality and an attribute (for example, repeatability) of the ENF signal, so as to detect a possible risk in a timely manner. When quality of the ENF signal is not high, there may be an abnormal risk. In this case, the preprocessing circuit may stop outputting the ENF signal to the analog-to-digital converter, to reduce a risk of a security mechanism being cracked.

According to a second aspect, an embodiment of this application provides a random number generation method. The method may be applied to the random number generation apparatus provided in any implementation of the first aspect. For a technical effect of a corresponding solution in the second aspect, refer to a technical effect that can be obtained by using the corresponding solution in the first aspect. Details are not described herein. For example, the random number generation method provided in this embodiment of this application mainly includes the following step: obtaining at least one piece of input data, where the at least one piece of input data includes first bit data, and the first bit data may be generated based on an ENF signal of an electric network; and generating a random number based on the foregoing at least one piece of input data.

Because the ENF signal of the electric network used in this embodiment of this application has true randomness, the first bit data also has true randomness. Therefore, when the random number is output based on the at least one piece of input data, the first random number is generated based on the first bit data, and the first random number is a true random number.

When the first random number is generated based on the first bit data, second bit data is generated based on the first bit data; and an exclusive OR operation is performed on the current first bit data and the second bit data, to generate the first random number, wherein the first random number is a true random number.

The random number generation method provided in this embodiment of this application may further generate a pseudo random number. For example, when the second bit data is generated based on the first bit data, at least one piece of third bit data may be correspondingly generated based on the at least one piece of input data, where the at least one piece of third bit data includes the second bit data; and then the at least one piece of third bit data is stored. After receiving a pseudo random number request message, third bit data may be randomly read from the at least one piece of stored third bit data, and a second random number is output based on the randomly read third bit data, where the second random number is a pseudo random number.

For example, when the at least one piece of third bit data is stored, based on an entropy rate corresponding to the at least one piece of third bit data, third bit data that is in the at least one piece of third bit data and that has an entropy rate greater than a first threshold may be stored into a first storage area, and third bit data that is in the at least one piece of third bit data and that has an entropy rate not greater than the first threshold may be stored into a second storage area.

In view of this, the pseudo random number request message may be a full-entropy pseudo random number request message or a reduced-entropy pseudo random number request message. After the full-entropy pseudo random number request message is received, the third bit data may be randomly read from the first storage area; and after the reduced-entropy pseudo random number request message is received, the third bit data may be randomly read from the second storage area.

To further improve quality of the first bit data, in a possible implementation, before the at least one piece of input data is obtained, the ENF signal may be first converted from an analog signal into a digital signal; and an operation is performed on the ENF signal that is converted into the digital signal, to obtain the first bit data.

To further improve quality of the first bit data, in a possible implementation, the ENF signal may be preprocessed first, and then the preprocessed ENF signal is converted from an analog signal into a digital signal.

To detect an abnormal risk in a timely manner, in a possible implementation, signal quality of the ENF signal may be first detected, and then conversion of the ENF signal from the analog signal to the digital signal is continued or stopped based on the signal quality of the ENF signal.

These aspects or other aspects in this application may be clearer and more intelligible in descriptions in the following embodiments.

### BRIEF DESCRIPTION OF DRAWINGS

FIG. 1 is a schematic diagram of a structure of a random number generation apparatus according to an embodiment of this application;
FIG. 2 is a schematic diagram of a specific structure of a random number generation apparatus according to an embodiment of this application;
FIG. 3 is a schematic diagram of a structure of a preprocessing circuit according to an embodiment of this application;
FIG. 4 is a schematic diagram of a structure of an entropy pool according to an embodiment of this application; and
FIG. 5 is a schematic flowchart of a random number generation method according to an embodiment of this application.

### DESCRIPTION OF EMBODIMENTS

Information security plays an important role in many types of electronic devices. For example, hundreds or thousands of electronic control units (electronic control unit, ECU) are integrated in a green car, and the electronic control units have a plurality of external communications interfaces such as vehicle-to-external-device, vehicle-to-vehicle, and vehicle-to-infrastructure. In addition, there are internal networks such as controller area network (CAN), local interconnect network (LIN), and Ethernet in green cars. Regardless of the external communications interfaces or the internal networks, specified security mechanisms are required during communication to ensure confidentiality, authenticity, and integrity of messages or data.

In a current communication security mechanism, a random number is a basis of a security mechanism in many electronic devices. For example, a random number may be used as an initialization vector, a session identifier, or a basic unit for key generation and verification. Usually, a higher quality of the random number indicates that the security mechanism based on the random number is less likely to be cracked. A quality of the random number may be understood as randomness of the random number, that is, an entropy of the random number. A higher entropy of the random number indicates higher quality of the random number. On the contrary, a lower entropy of the random number indicates lower quality of the random number.

Random numbers can be classified into true random numbers and pseudo random numbers based on generation modes of the random numbers. The true random number is a random number generated by using a physical phenomenon, and a value of the random number is totally unpredictable, and has real randomness. For example, thermal noise generated in a circuit, a decay process of a radioactive element, or timing information related to counting of a Geiger counter can be used to generate a true random number.

A pseudo random number is a random number generated by using a random algorithm. Although a pseudo random number may also have a high entropy or even a full entropy, the pseudo random number is generated according to an algorithm. Therefore, a value of the random number is theoretically predictable and does not have real randomness. It can be learned that compared with the pseudo random number, the true random number can provide higher security assurance for the electronic devices. Therefore, a high-quality hardware entropy source is disposed in some electronic devices to generate true random numbers. However, this implementation increases system complexity of the electronic device, and also increases manufacturing costs of the electronic device.

In view of this, an embodiment of this application provides a random number generation apparatus. The random number generation apparatus may be a chip or a module in an electronic device, or may be an electronic device (for example, an electronic device such as a green car, the internet of things (IoT) device, a smart home device, or an autonomous vehicle) that can connect to an electric network. This is not limited in this embodiment of this application. The random number generation apparatus provided in this embodiment of this application may generate a random number based on an electric network frequency ( ENF) signal. The ENF signal of the electric network changes with an electricity requirement of a user in the electric network, and the electric network carries a large quantity of users. Therefore, it may be considered that an overall electricity requirement of the users in the electric network is irregular, and further, a true random number may be generated based on the ENF signal.

To make the objectives, technical solutions, and advantages of this application clearer, the following further describes this application in detail with reference to the accompanying drawings. A specific operation method in a method embodiment may also be applied to an apparatus embodiment or a system embodiment. It should be noted that in description of this application, "at least one" means one or more, and "a plurality of" means two or more. In view of this, in embodiments of the present invention, "a plurality of" may also be understood as "at least two". The term "and/or" describes an association relationship for describing associated objects and represents that three relationships may exist. For example, A and/or B may represent the following three cases: Only A exists, both A and B exist, and only B exists. In addition, the character "/", unless otherwise specified, generally represents an "or" relationship between the associated objects. In addition, it should be understood that in description of this application, terms such as "first" and "second" are merely used for distinguishing and description, but should not be understood as indicating or implying relative importance, or should not be understood as indicating or implying a sequence.

It should be noted that the "connection" in embodiments of this application refers to an electric connection, and the connection between two electrical elements may be a direct or indirect connection between the two electrical elements. For example, a connection between A and B may represent that A and B are directly connected to each other, or A and B are indirectly connected to each other by using one or more other electrical elements. For example, the connection between A and B may also represent that A is directly connected to C, C is directly connected to B, and A and B are connected to each other through C.

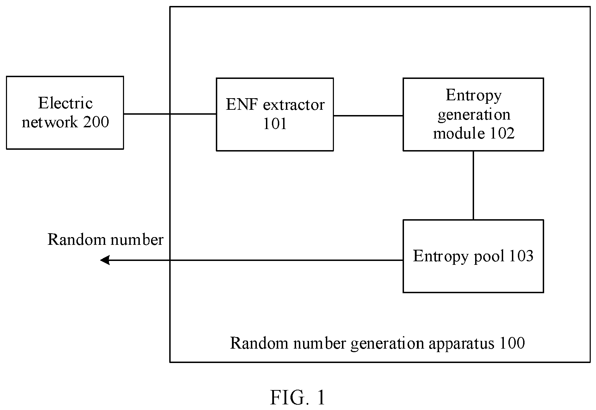

FIG. 1 shows an example of a schematic diagram of a structure of a random number generation apparatus according to an embodiment of this application. As shown in FIG. 1, the random number generation apparatus 100 mainly includes an ENF extractor 101, an entropy generation module 102, and an entropy pool 103. An output end of the ENF extractor 101 is connected to an input end of the entropy generation module 102, and an output end of the entropy generation module 102 is connected to the entropy pool 103.

The following separately describes the ENF extractor 101, the entropy generation module 102, and the entropy pool 103 as examples.

### 1. ENF extractor 101:

The ENF extractor 101 may be connected to an electric network, and the ENF extractor 101 may extract an ENF signal from the electric network. Signal strength of the ENF signal may represent an electric network frequency change. For example, if the electric network frequency is 50 Hz, the frequency of the ENF signal is also 50 Hz.

In this embodiment of this application, the electric network to which the ENF extractor 101 is connected may supply power to a large quantity of users. For example, the electric network may be a large electric network such as an urban electric network. When power consumption of users changes, the electric network frequency also changes. That is, the electric network frequency fluctuates within a specified range. Because there are a large quantity of users in the electric network, the power consumption of the users in the electric network is usually unpredictable. That is, the electric network frequency is completely random. Therefore, the signal strength of the ENF signal extracted by the ENF extractor 101 from the electric network is also completely random.

### 2. Entropy generation module 102:

The entropy generation module 102 may generate first bit data based on the ENF signal provided by the ENF extractor 101. In this embodiment of this application, because signal strength of the ENF signal is completely random, the entropy generation module 102 may generate, based on the ENF signal, the first bit data that has true randomness.

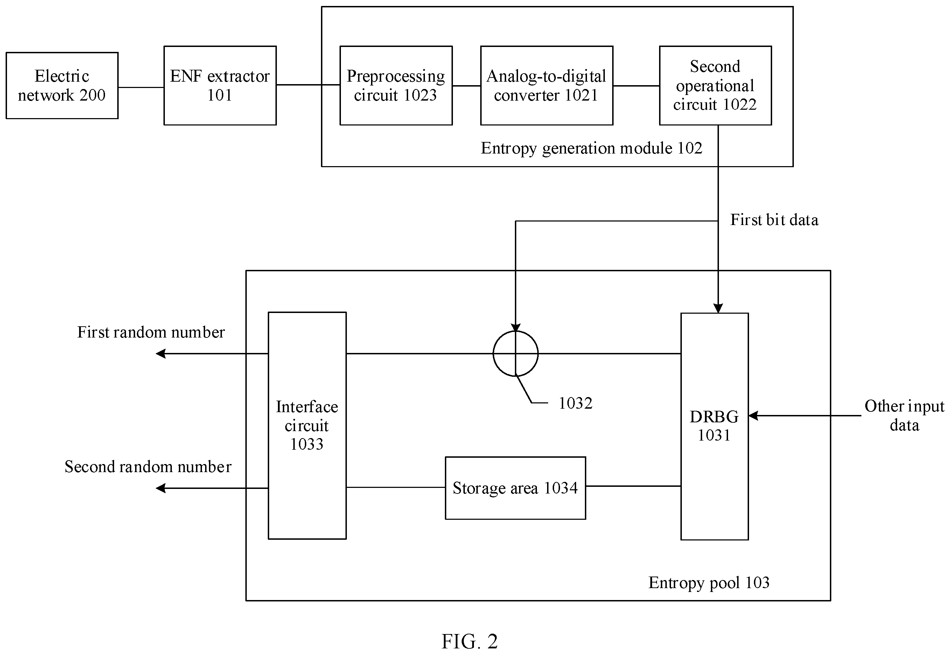

For example, as shown in FIG. 2, the entropy generation module 102 may include an analog-to-digital converter 1021 and a second operational circuit 1022. An input end of the analog-to-digital converter 1021 is connected to the ENF extractor 101, and an output end of the analog-to-digital converter 1021 is connected to the second operational circuit 1022.

The analog-to-digital converter 1021 may convert the ENF signal from an analog signal to a digital signal. For example, the analog-to-digital converter 1021 may perform M-bit (multi-bit) quantization processing on the ENF signal in an analog signal form, to obtain an ENF signal in a digital signal form. The ENF signal in the digital signal form may carry a bit stream, for example, 0101100101.

The second operational circuit 1022 may perform an operation on the ENF signal that is converted into the digital signal, to obtain the first bit data. For example, the second operational circuit 1022 may perform an operation according to an entropy conditioning algorithm based on the bit stream carried in the ENF signal that is converted into the digital signal, to obtain conditioned full entropy bits, that is, the first bit data. The entropy conditioning algorithm used by the second operational circuit 1022 may be an algorithm such as a secure hash algorithm (SHA)-256. This is not limited in this embodiment of this application. A deviation in the bit data may be removed by performing an operation according to the entropy conditioning algorithm, to output conditioned full entropy bits with a high entropy value (approximately equal to 1 bit/bit), that is, the first bit data.

To further improve quality of the first bit data, in a possible implementation, the entropy generation module 102 may further include a preprocessing circuit 1023. As shown in FIG. 2, an input end of the preprocessing circuit 1023 is connected to the ENF extractor 101, and an output end of the preprocessing circuit 1023 is connected to the entropy generation module 102.

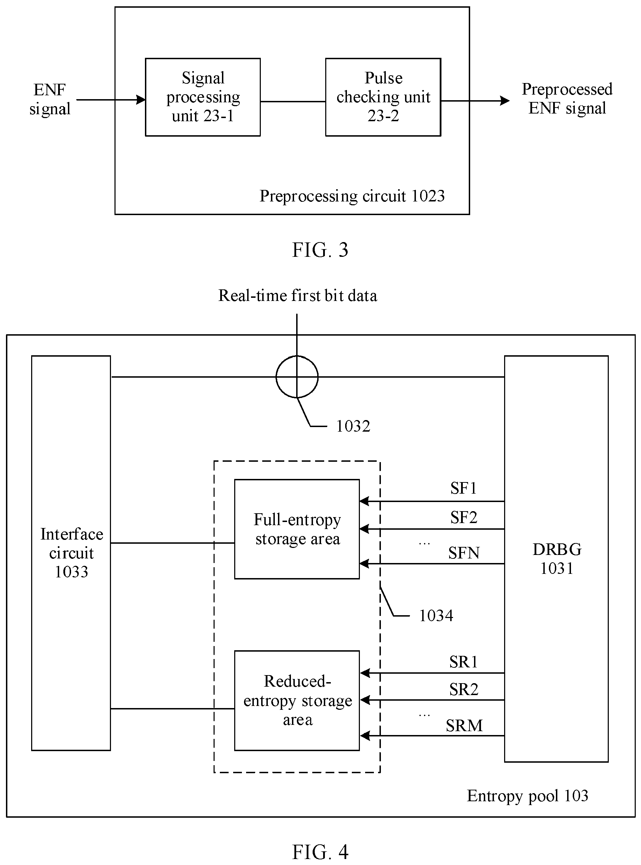

The preprocessing circuit 1023 may preprocess the ENF signal provided by the ENF extractor 101, and output the preprocessed ENF signal to the analog-to-digital converter 1021. For example, as shown in FIG. 3, the preprocessing circuit 1023 may include a signal processing unit 23-1. The signal processing unit 23-1 may perform processing such as filtering and enhancement on the ENF signal to remove noise or a useless component from the ENF signal. For example, a random or abnormal peak pulse, a ghost signal, and the like in the ENF signal can be removed, so that quality of the first bit data can be improved.

In a possible implementation, the preprocessing circuit 1023 may further detect signal quality of the ENF signal; and continue or stop, based on the signal quality of the ENF signal, outputting the ENF signal to the analog-to-digital converter 1021. For example, as shown in FIG. 3, the preprocessing circuit 1023 includes the signal processing unit 23-1 and a pulse checking unit 23-2. The signal processing unit 23-1 may continuously sample the ENF signal to obtain ENF sample data. The pulse checking unit 23-2 may continuously monitor the ENF sample data, to ensure that the preprocessed ENF signal output to the analog-to-digital converter 1021 has enough randomness.

For example, when the electric network is powered off or the ENF extractor 101 is abnormal (for example, faulty or powered off), or when an attacker attempts to control the ENF signal to affect random number generation, the pulse checking unit 23-2 may check randomness of the ENF sample data to determine signal quality of the ENF signal, for example, randomness quality and an attribute (for example, repeatability) of the ENF signal, so as to detect a possible risk in a timely manner. When quality of the ENF signal is not high, there may be an abnormal risk. In this case, the pulse checking unit 23-2 may stop outputting the ENF signal to the analog-to-digital converter 1021, to reduce a risk of a security mechanism being cracked.

### 3. Entropy pool 103:

In this embodiment of this application, the entropy pool 103 may receive at least one piece of input data. Different input data may be from a same entropy source or different entropy sources. For example, the at least one piece of input data received by the entropy pool 103 may include the first bit data, and an entropy source corresponding to the first bit data is the ENF signal of the electric network. Other input data may be from another type of entropy source. This is not limited in this embodiment of this application.

It should be noted that the entropy pool 103 provided in this embodiment of this application may generate both a true random number and a pseudo random number.

The following describes the details based on different cases.

### True random number:

As shown in FIG. 2, the entropy pool 103 includes a first operational circuit 1032, and the first operational circuit 1032 is connected to the output end of the entropy generation module 102. The first operational circuit 1032 may receive real-time first bit data from the entropy generation module 102. The first bit data has true randomness. Therefore, the first operational circuit 1032 may generate a first random number with true randomness by performing an operation on the current first bit data. In other words, the first random number is a true random number.

For example, as shown in FIG. 2, the entropy pool 103 may further include a deterministic random bit generator (DRBG) 1031, and the first operational circuit 1032 is further connected to an output end of the DRBG 1031. The DRBG 1031 may be a DRBG approved by the National Institute of Standards and Technology (NIST). The DRBG 1031 may generate second bit data based on the first bit data. In addition, because the first bit data has true randomness, the second bit data output by the DRBG 1031 may be a full-entropy pseudo random number with a highest entropy value (approximately equal to 1 bit/bit).

In this case, the first operational circuit 1032 may perform an exclusive OR operation on the current first bit data and third bit data, to generate the first random number. It should be noted that the current first bit data is real-time bit data, that is, first bit data output by the DRBG 1031 when the exclusive OR operation is performed. Because the current first bit data has true randomness, and the third bit data is a full-entropy pseudo random number, it may be considered that the first random number has true randomness, that is, the first random number is a true random number.

As shown in FIG. 2, the entropy pool 103 may further include an interface circuit 1033. After receiving a true random number request message, the interface circuit 1033 may receive the first random number from the first operational circuit 1032 and output the first random number.

### Pseudo random number:

In this embodiment of this application, the DRBG 1031 may correspondingly generate at least one piece of third bit data based on the at least one piece of received input data. For example, if the DRBG 1031 receives input data A to C, the DRBG 1031 may generate second bit data a based on the input data A, generate second bit data b based on the input data B, and generate second bit data c based on the input data C. In this case, the third bit data generated by the DRBG 1031 based on the first bit data (included in the at least one piece of input data) may be understood as the second bit data.

The at least one piece of second bit data output by the DRBG 1031 has pseudo randomness, that is, the at least one piece of third bit data is a pseudo random number. As shown in FIG. 2, the entropy pool 103 may further include a storage area 1034, and the storage area 1034 may store at least one piece of third bit data output by the DRBG 1031. In this case, the interface circuit 1033 may randomly read a piece of third bit data from the storage area. The interface circuit 1033 may output the randomly read third bit data as a second random number, or may generate the second random number after performing a further operation on the randomly read third bit data, and output the second random number. This is not much limited in this embodiment of this application.

In a possible implementation, as shown in FIG. 4, the storage area 1034 includes a full-entropy storage area and a reduced-entropy storage area. The DRBG 1031 may separately store each piece of third bit data in the full-entropy storage area or the reduced-entropy storage area based on an entropy rate of each piece of third bit data in the at least one piece of third bit data.

Specifically, because the at least one piece of input data received by the DRBG 1031 may be from different entropy sources, and the different entropy sources have different randomness, the at least one piece of third bit data correspondingly generated by the DRBG 1031 may have different randomness, that is, the at least one piece of third bit data may have different entropy rates.

In this embodiment of this application, the full-entropy storage area may store third bit data that has an entropy rate greater than a first threshold, and the reduced-entropy storage area may store third bit data that has an entropy rate not greater than the first threshold. As shown in FIG. 4, the DRBG 1031 may output M + N pieces of third bit data, where both M and N are integers greater than or equal to 1. Third bit data SF1 to third bit data SFN have entropy rates greater than the first threshold, and therefore may be stored in the full-entropy storage area. Third bit data SR1 to third bit data SRM have entropy rates not greater than the first threshold, and therefore may be stored in the reduced-entropy storage area.

In this case, a random number request message received by the interface circuit 1033 may be a full-entropy pseudo random number request message or a reduced-entropy pseudo random number message. After receiving the full entropy pseudo random number request message, the interface circuit 1033 may randomly read third bit data from the full-entropy storage area, and output a third random number based on the randomly read third bit data. After receiving the reduced-entropy pseudo random number request message, the interface circuit 1033 may randomly read third bit data from the reduced-entropy storage area, and output a third random number based on the randomly read third bit data.

In this implementation, the interface circuit 1033 may be enabled to output third random numbers with different entropy rates, so as to respond to random number requests in a plurality of application scenarios.

Based on a same technical concept, an embodiment of this application further provides a random number generation method. The random number generation method may be applied to any random number generation apparatus provided in the foregoing embodiment of this application. For specific implementation of the method embodiment, refer to the foregoing apparatus embodiment. Details are not repeated.

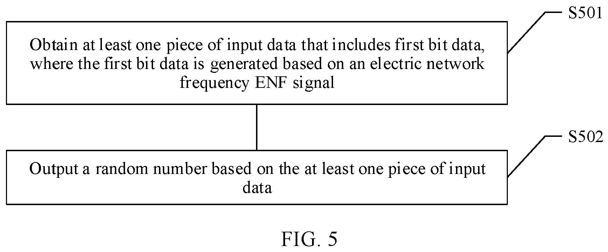

For example, as shown in FIG. 5, the random number generation method provided in this embodiment of this application mainly includes the following steps.

S501: Obtain at least one piece of input data that includes first bit data, where the first bit data is generated based on an electric network frequency ENF signal.

S502: Output a random number based on the at least one piece of input data.

Because the ENF signal of the electric network used in this embodiment of this application has true randomness, the first bit data also has true randomness. Therefore, when the random number is output based on the at least one piece of input data, a first random number may be generated based on the first bit data, and the first random number may be a true random number.

For example, when the first random number is generated based on the first bit data, second bit data may be generated based on the first bit data; and an exclusive OR operation is performed on the current first bit data and the second bit data, to generate the first random number.

The random number generation method provided in this embodiment of this application may further generate a pseudo random number. For example, when the second bit data is generated based on the first bit data, at least one piece of third bit data may be correspondingly generated based on the at least one piece of input data, where the at least one piece of third bit data includes the second bit data; and then the at least one piece of third bit data is stored. After receiving a pseudo random number request message, third bit data may be randomly read from the at least one piece of stored third bit data, and a second random number is output based on the randomly read third bit data, where the second random number is a pseudo random number.

For example, when the at least one piece of third bit data is stored, based on an entropy rate of the at least one piece of third bit data, third bit data that is in the at least one piece of third bit data and that has an entropy rate greater than a first threshold may be stored into a first storage area, and third bit data that is in the at least one piece of third bit data and that has an entropy rate not greater than the first threshold may be stored into a second storage area.

In view of this, the pseudo random number request message may be a full-entropy pseudo random number request message or a reduced-entropy pseudo random number request message. After the full-entropy pseudo random number request message is received, the third bit data may be randomly read from the first storage area; and after the reduced-entropy pseudo random number request message is received, the third bit data may be randomly read from the second storage area.

In a possible implementation, before the at least one piece of input data is obtained, the ENF signal may be first converted from an analog signal into a digital signal; and an operation is performed on the ENF signal that is converted into the digital signal, to obtain the first bit data.

To further improve quality of the random number, in a possible implementation, the ENF signal may be preprocessed first, and then the preprocessed ENF signal is converted from an analog signal into a digital signal.

To detect an abnormal risk in a timely manner, in a possible implementation, signal quality of the ENF signal may be first detected, and then conversion of the ENF signal from the analog signal to the digital signal is continued or stopped based on the signal quality of the ENF signal.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Clearly, a person skilled in the art can make various modifications and variations to this application without departing from the protection scope of this application. This application is intended to cover the modifications and variations of this application provided that they fall within the scope of the following claims and equivalent technologies of this application.

## Claims

1. A random number generation apparatus, comprising an electric network frequency, ENF, extractor, an entropy generation module, and an entropy pool, wherein an input end of the ENF extractor is connected to an electric network, an output end of the ENF extractor is connected to an input end of the entropy generation module, and an output end of the entropy generation module is connected to the entropy pool;
the ENF extractor is configured to extract an ENF signal of the electric network;
the entropy generation module is configured to generate first bit data based on the ENF signal; and
the entropy pool is configured to: receive at least one piece of input data, wherein the at least one piece of input data comprises the first bit data; and generate a random number based on the at least one piece of input data;
wherein the entropy pool comprises a first operational circuit and a deterministic random bit generator, DRBG, and the DRBG is separately connected to the output end of the entropy generation module and the first operational circuit;
the DRBG is configured to generate second bit data based on the first bit data; and
the first operational circuit is configured to:
perform an exclusive OR operation on the first bit data and the second bit data that are received from the entropy generation module, to generate the first random number, wherein the first random number is a true random number.

2. The random number generation apparatus according to claim 1, wherein the entropy pool further comprises a storage area and an interface circuit;
the DRBG is specifically configured to correspondingly generate at least one piece of third bit data based on the at least one piece of input data, wherein the at least one piece of third bit data comprises the second bit data;
the storage area is configured to store the at least one piece of third bit data; and
the interface circuit is configured to: after receiving a pseudo random number request message, randomly read third bit data from the storage area, and output a second random number based on the randomly read third bit data, wherein the second random number is a pseudo random number.

3. The random number generation apparatus according to claim 2, wherein the storage area comprises a first storage area and a second storage area;
the first storage area is configured to store third bit data that has an entropy rate greater than a first threshold;
the second storage area is configured to store third bit data that has an entropy rate not greater than the first threshold; and
the DRBG is further configured to: based on an entropy rate corresponding to the at least one piece of third bit data, store third bit data that is in the at least one piece of third bit data and that has an entropy rate greater than the first threshold into the first storage area, and store third bit data that is in the at least one piece of third bit data and that has an entropy rate not greater than the first threshold into the second storage area.

4. The random number generation apparatus according to claim 3, wherein the pseudo random number request message comprises a full-entropy pseudo random number request message and a reduced-entropy pseudo random number request message; and
the interface circuit is specifically configured to:
randomly read the third bit data from the first storage area after receiving the full-entropy pseudo random number request message; and
randomly read the third bit data from the second storage area after receiving the reduced-entropy pseudo random number request message.

5. The random number generation apparatus according to any one of claims 1 to 4, wherein the entropy generation module comprises an analog-to-digital converter and a second operational circuit;
the analog-to-digital converter is configured to convert the ENF signal from an analog signal to a digital signal; and
the second operational circuit is configured to perform an operation on the ENF signal that is converted into the digital signal, to obtain the first bit data.

6. The random number generation apparatus according to claim 5, wherein the entropy generation module further comprises a preprocessing circuit, and the preprocessing circuit is separately connected to the ENF extractor and the analog-to-digital converter; and
the preprocessing circuit is configured to preprocess the ENF signal, and output the preprocessed ENF signal to the analog-to-digital converter.

7. The random number generation apparatus according to claim 6, wherein the preprocessing circuit is further configured to:
detect signal quality of the ENF signal; and
continue or stop, based on the signal quality of the ENF signal, outputting the ENF signal to the analog-to-digital converter.

8. A random number generation method, comprising:
obtaining at least one piece of input data, wherein the at least one piece of input data comprises first bit data, and the first bit data is generated based on an electric network frequency, ENF, signal; and
generating a random number based on the at least one piece of input data;
wherein the generating a random number based on the at least one piece of input data comprises:
generating second bit data based on the first bit data; and
performing an exclusive OR operation on the current first bit data and the second bit data, to generate the first random number, wherein the first random number is a true random number.

9. The random number generation method according to claim 8, wherein the generating second bit data based on the first bit data comprises:
correspondingly generating at least one piece of third bit data based on the at least one piece of input data, wherein the at least one piece of third bit data comprises the second bit data; and
after the correspondingly generating at least one piece of third bit data based on the at least one piece of input data, the method further comprises:
storing the at least one piece of third bit data; and
randomly reading third bit data from the at least one piece of stored third bit data after receiving a pseudo random number request message, and outputting a second random number based on the randomly read third bit data, wherein the second random number is a pseudo random number.

10. The random number generation method according to claim 9, wherein the storing the at least one piece of third bit data comprises:
based on an entropy rate corresponding to the at least one piece of third bit data, storing third bit data that is in the at least one piece of third bit data and that has an entropy rate greater than a first threshold into a first storage area, and storing third bit data that is in the at least one piece of third bit data and that has an entropy rate not greater than the first threshold into a second storage area.

11. The random number generation method according to claim 10, wherein the pseudo random number request message comprises a full-entropy pseudo random number request message and a reduced-entropy pseudo random number request message; and
the randomly reading third bit data from the at least one piece of stored third bit data after receiving a pseudo random number request message comprises:
randomly reading the third bit data from the first storage area after receiving the full-entropy pseudo random number request message; and
randomly reading the third bit data from the second storage area after receiving the reduced-entropy pseudo random number request message.

12. The random number generation method according to any one of claims 8 to 11, wherein before the obtaining at least one piece of input data, the method further comprises:
converting the ENF signal from an analog signal into a digital signal; and
performing an operation on the ENF signal that is converted into the digital signal, to obtain the first bit data.

13. The random number generation method according to claim 12, wherein before the converting the ENF signal from an analog signal to a digital signal, the method further comprises:
preprocessing the ENF signal.

14. The random number generation method according to claim 13, wherein before the converting the ENF signal from an analog signal to a digital signal, the method further comprises:
detecting signal quality of the ENF signal; and
continuing or stopping, based on the signal quality of the ENF signal, converting the ENF signal from an analog signal to a digital signal.

15. An electronic device comprising a random number generation apparatus according to any one of claims 1 to 7, wherein the electronic device is one of the following:
a vehicle;
an Internet of things, IoT, device; or
a smart home device.

## Patentansprüche

1. Vorrichtung zur Erzeugung von Zufallszahlen, umfassend einen Extraktor für elektrische Netzwerkfrequenzen, ENF-Extraktor, ein Entropieerzeugungsmodul und einen Entropiepool, wobei ein Eingangsende des ENF-Extraktors mit einem elektrischen Netzwerk verbunden ist, ein Ausgangsende des ENF-Extraktors mit einem Eingangsende des Entropieerzeugungsmoduls verbunden ist und ein Ausgangsende des Entropieerzeugungsmoduls mit dem Entropiepool verbunden ist;
der ENF-Extraktor dazu konfiguriert ist, ein ENF-Signal des elektrischen Netzwerks zu extrahieren;
das Entropieerzeugungsmodul dazu konfiguriert ist, erste Bitdaten basierend auf dem ENF-Signal zu erzeugen; und
der Entropiepool dazu konfiguriert ist: mindestens ein Teil von Eingabedaten zu empfangen, wobei das mindestens eine Teil von Eingabedaten die ersten Bitdaten umfasst; und basierend auf dem mindestens einen Teil von Eingabedaten eine Zufallszahl zu erzeugen;
wobei der Entropiepool eine erste Operationsschaltung und einen deterministischen Zufallsbitgenerator, DRBG, umfasst, und der DRBG separat mit dem Ausgangsende des Entropieerzeugungsmoduls und der ersten Operationsschaltung verbunden ist;
der DRBG dazu konfiguriert ist, zweite Bitdaten basierend auf den ersten Bitdaten zu erzeugen; und
die erste Operationsschaltung dazu konfiguriert ist:
eine Exklusiv-ODER-Operation an den ersten Bitdaten und den zweiten Bitdaten durchzuführen, die aus dem Entropieerzeugungsmodul empfangen werden, um die erste Zufallszahl zu erzeugen, wobei die erste Zufallszahl eine echte Zufallszahl ist.

2. Vorrichtung zur Erzeugung von Zufallszahlen nach Anspruch 1, wobei der Entropiepool ferner einen Speicherbereich und eine Schnittstellenschaltung umfasst;
der DRBG speziell dazu konfiguriert ist, mindestens ein Teil von dritten Bitdaten basierend auf dem mindestens einen Teil von Eingangsdaten entsprechend zu erzeugen, wobei das mindestens eine Teil von dritten Bitdaten die zweiten Bitdaten umfasst;
der Speicherbereich dazu konfiguriert ist, das mindestens eine Teil von dritten Bitdaten zu speichern; und
die Schnittstellenschaltung dazu konfiguriert ist: nach dem Empfangen einer Anforderungsnachricht für Pseudozufallszahlen dritte Bitdaten aus dem Speicherbereich zufällig zu lesen und eine zweite Zufallszahl basierend auf den zufällig gelesenen dritten Bitdaten auszugeben, wobei die zweite Zufallszahl eine Pseudozufallszahl ist.

3. Vorrichtung zur Erzeugung von Zufallszahlen nach Anspruch 2, wobei der Speicherbereich einen ersten Speicherbereich und einen zweiten Speicherbereich umfasst;
der erste Speicherbereich dazu konfiguriert ist, dritte Bitdaten zu speichern, die eine Entropierate aufweisen, die größer als ein erster Schwellenwert ist;
der zweite Speicherbereich dazu konfiguriert ist, dritte Bitdaten zu speichern, die eine Entropierate aufweisen, die nicht größer als der erste Schwellenwert ist; und
der DRBG ferner dazu konfiguriert ist: basierend auf einer Entropierate entsprechend dem mindestens einen Teil von dritten Bitdaten dritte Bitdaten, die in dem mindestens einen Teil von dritten Bitdaten enthalten sind und die eine Entropierate aufweisen, die größer als der erste Schwellenwert ist, in den ersten Speicherbereich zu speichern, und dritte Bitdaten, die in dem mindestens einen Teil von dritten Bitdaten enthalten sind und die eine Entropierate aufweisen, die nicht größer als der erste Schwellenwert ist, in den zweiten Speicherbereich zu speichern.

4. Vorrichtung zur Erzeugung von Zufallszahlen nach Anspruch 3, wobei die Anforderungsnachricht für Pseudozufallszahlen eine Anforderungsnachricht für Pseudozufallszahlen mit voller Entropie und eine Anforderungsnachricht für Pseudozufallszahlen mit reduzierter Entropie umfasst; und
die Schnittstellenschaltung speziell dazu konfiguriert ist:
die dritten Bitdaten nach dem Empfangen der Anforderungsnachricht für Pseudozufallszahlen mit voller Entropie zufällig aus dem ersten Speicherbereich zu lesen; und
die dritten Bitdaten nach dem Empfangen der Anforderungsnachricht für Pseudozufallszahlen mit reduzierter Entropie zufällig aus dem zweiten Speicherbereich zu lesen.

5. Vorrichtung zur Erzeugung von Zufallszahlen nach einem der Ansprüche 1 bis 4, wobei das Entropieerzeugungsmodul einen Analog-Digital-Wandler und eine zweite Operationsschaltung umfasst;
der Analog-Digital-Wandler dazu konfiguriert ist, das ENF-Signal von einem analogen Signal in ein digitales Signal umzuwandeln; und die zweite Operationsschaltung dazu konfiguriert ist, eine Operation an dem ENF-Signal durchzuführen, das in das digitale Signal umgewandelt wird, um die ersten Bitdaten zu ermitteln.

6. Vorrichtung zur Erzeugung von Zufallszahlen nach Anspruch 5, wobei das Entropieerzeugungsmodul ferner eine Vorverarbeitungsschaltung umfasst, und die Vorverarbeitungsschaltung separat mit dem ENF-Extraktor und dem Analog-Digital-Wandler verbunden ist; und
die Vorverarbeitungsschaltung dazu konfiguriert ist, das ENF-Signal vorzuverarbeiten und das vorverarbeitete ENF-Signal an den Analog-Digital-Wandler auszugeben.

7. Vorrichtung zur Erzeugung von Zufallszahlen nach Anspruch 6, wobei die Vorverarbeitungsschaltung ferner dazu konfiguriert ist:
die Signalqualität des ENF-Signals zu erkennen; und
basierend auf der Signalqualität des ENF-Signals das Ausgeben des ENF-Signals an den Analog-Digital-Wandler fortzusetzen oder zu beenden.

8. Verfahren zur Erzeugung von Zufallszahlen, umfassend:
Erlangen mindestens eines Teils von Eingangsdaten, wobei das mindestens eine Teil von Eingangsdaten erste Bitdaten umfasst, und
die ersten Bitdaten basierend auf einem Signal der elektrischen Netzwerkfrequenz, ENF-Signal, erzeugt werden; und
Erzeugen einer Zufallszahl basierend auf dem mindestens einen Teil von Eingabedaten;
wobei das Erzeugen einer Zufallszahl basierend auf dem mindestens einen Teil von Eingabedaten Folgendes umfasst:
Erzeugen zweiter Bitdaten basierend auf den ersten Bitdaten; und
Durchführen einer Exklusiv-ODER-Operation an den aktuellen ersten Bitdaten und den zweiten Bitdaten, um die erste Zufallszahl zu erzeugen, wobei die erste Zufallszahl eine echte Zufallszahl ist.

9. Verfahren zur Erzeugung von Zufallszahlen nach Anspruch 8, wobei das Erzeugen zweiter Bitdaten basierend auf den ersten Bitdaten Folgendes umfasst:
entsprechendes Erzeugen mindestens eines Teils von dritten Bitdaten basierend auf dem mindestens einen Teil von Eingangsdaten, wobei das mindestens eine Teil von dritten Bitdaten die zweiten Bitdaten umfasst; und
das Verfahren nach dem entsprechenden Erzeugen mindestens eines Teils von dritten Bitdaten basierend auf dem mindestens einen Teil von Eingangsdaten ferner Folgendes umfasst:
Speichern des mindestens einen Teils von dritten Bitdaten; und
zufälliges Lesen von dritten Bitdaten aus dem mindestens einen Teil von gespeicherten dritten Bitdaten nach dem Empfangen einer Anforderungsnachricht für Pseudozufallszahlen und Ausgeben einer zweiten Zufallszahl basierend auf den zufällig gelesenen dritten Bitdaten, wobei die zweite Zufallszahl eine Pseudozufallszahl ist.

10. Verfahren zur Erzeugung von Zufallszahlen nach Anspruch 9, wobei das Speichern des mindestens einen Teils von dritten Bitdaten Folgendes umfasst:
Speichern, basierend auf einer Entropierate entsprechend dem mindestens einen Teil von dritten Bitdaten, von dritten Bitdaten, die in dem mindestens einen Teil von dritten Bitdaten enthalten sind und die eine Entropierate aufweisen, die größer als ein erster Schwellenwert ist, in einen ersten Speicherbereich, und Speichern von dritten Bitdaten, die in dem mindestens einen Teil von dritten Bitdaten enthalten sind und die eine Entropierate aufweisen, die nicht größer als der erste Schwellenwert ist, in einen zweiten Speicherbereich.

11. Verfahren zur Erzeugung von Zufallszahlen nach Anspruch 10, wobei die Anforderungsnachricht für Pseudozufallszahlen eine Anforderungsnachricht für Pseudozufallszahlen mit voller Entropie und eine Anforderungsnachricht für Pseudozufallszahlen mit reduzierter Entropie umfasst; und
das zufällige Lesen von dritten Bitdaten aus dem mindestens einen Teil von gespeicherten dritten Bitdaten nach dem Empfangen einer Anforderungsnachricht für Pseudozufallszahlen Folgendes umfasst:
zufälliges Lesen der dritten Bitdaten aus dem ersten Speicherbereich nach dem Empfangen der Anforderungsnachricht für Pseudozufallszahlen mit voller Entropie; und
zufälliges Lesen der dritten Bitdaten aus dem zweiten Speicherbereich nach dem Empfangen der Anforderungsnachricht für Pseudozufallszahlen mit reduzierter Entropie.

12. Verfahren zur Erzeugung von Zufallszahlen nach einem der Ansprüche 8 bis 11, wobei das Verfahren vor dem Ermitteln mindestens eines Teils von Eingabedaten ferner Folgendes umfasst:
Umwandeln des ENF-Signals von einem analogen in ein digitales Signal; und
Durchführen einer Operation an dem ENF-Signal, das in ein digitales Signal umgewandelt wird, um die ersten Bitdaten zu ermitteln.

13. Verfahren zur Erzeugung von Zufallszahlen nach Anspruch 12, wobei das Verfahren vor dem Umwandeln des ENF-Signals von einem analogen Signal in ein digitales Signal ferner Folgendes umfasst: Vorverarbeiten des ENF-Signals.

14. Verfahren zur Erzeugung von Zufallszahlen nach Anspruch 13, wobei das Verfahren vor dem Umwandeln des ENF-Signals von einem analogen Signal in ein digitales Signal ferner Folgendes umfasst:
Erkennen der Signalqualität des ENF-Signals; und
Fortsetzen oder Beenden des Umwandelns des ENF-Signals von einem analogen Signal in ein digitales Signal basierend auf der Signalqualität des ENF-Signals.

15. Elektronische Einrichtung, umfassend eine Vorrichtung zur Erzeugung von Zufallszahlen nach einem der Ansprüche 1 bis 7, wobei die elektronische Vorrichtung eines der folgenden ist:
ein Fahrzeug;
eine Einrichtung für das Internet der Dinge, IoT-Einrichtung; oder
eine Smart-Home-Einrichtung.

## Revendications

1. Appareil de génération de nombres aléatoires, comprenant un extracteur de fréquence de réseau électrique, ENF, un module de génération d'entropie et un pool d'entropie, dans lequel une extrémité d'entrée de l'extracteur ENF est connectée à un réseau électrique, une extrémité de sortie de l'extracteur ENF est connectée à une extrémité d'entrée du module de génération d'entropie et une extrémité de sortie du module de génération d'entropie est connectée au pool d'entropie ;
l'extracteur ENF est configuré pour extraire un signal ENF du réseau électrique ;
le module de génération d'entropie est configuré pour générer des premières données binaires à partir du signal ENF ; et
le pool d'entropie est configuré pour : recevoir au moins un élément de données d'entrée, dans lequel l'au moins un élément de données d'entrée comprend les premières données binaires ; et générer un nombre aléatoire sur la base de l'au moins un élément de données d'entrée ;
dans lequel le pool d'entropie comprend un premier circuit opérationnel et un générateur de bits aléatoires déterministe, DRBG, et le DRBG est connecté séparément à l'extrémité de sortie du module de génération d'entropie et au premier circuit opérationnel ;
le DRBG est configuré pour générer des deuxièmes données binaires sur la base des premières données binaires ; et
le premier circuit opérationnel est configuré pour :
réaliser une opération OU exclusif sur les premières données binaires et les deuxièmes données binaires qui sont reçues du module de génération d'entropie, afin de générer le premier nombre aléatoire, dans lequel le premier nombre aléatoire est un véritable nombre aléatoire.

2. Appareil de génération de nombres aléatoires selon la revendication 1, dans lequel le pool d'entropie comprend également une zone de stockage et un circuit d'interface ;
le DRBG est spécifiquement configuré pour générer de manière correspondante au moins un élément de troisièmes données binaires sur la base de l'au moins un élément de données d'entrée, dans lequel l'au moins un élément de troisièmes données binaires comprend les deuxièmes données binaires ;
la zone de stockage est configurée pour stocker l'au moins un élément de troisièmes données binaires ; et
le circuit d'interface est configuré pour : après la réception d'un message de requête de nombre pseudo-aléatoire, lire de manière aléatoire des troisièmes données binaires à partir de la zone de stockage, et produire un second nombre aléatoire sur la base des troisièmes données binaires lues de manière aléatoire, dans lequel le second nombre aléatoire est un nombre pseudo-aléatoire.

3. Appareil de génération de nombres aléatoires selon la revendication 2, dans lequel la zone de stockage comprend une première zone de stockage et une seconde zone de stockage ;
la première zone de stockage est configurée pour stocker des troisièmes données binaires qui ont un taux d'entropie supérieur à un premier seuil ;
la seconde zone de stockage est configurée pour stocker des troisièmes données binaires qui ont un taux d'entropie non supérieur au premier seuil ; et
le DRBG est également configuré pour : sur la base d'un taux d'entropie correspondant à l'au moins un élément de troisièmes données binaires, stocker des troisièmes données binaires qui sont dans l'au moins un élément de troisièmes données binaires et qui ont un taux d'entropie supérieur au premier seuil dans la première zone de stockage, et stocker des troisièmes données binaires qui sont dans l'au moins un élément de troisièmes données binaires et qui ont un taux d'entropie non supérieur au premier seuil dans la seconde zone de stockage.

4. Appareil de génération de nombres aléatoires selon la revendication 3, dans lequel le message de requête de nombre pseudo-aléatoire comprend un message de requête de nombre pseudo-aléatoire à entropie complète et un message de requête de nombre pseudo-aléatoire à entropie réduite ; et
le circuit d'interface est spécifiquement configuré pour :
lire de manière aléatoire les troisièmes données binaires à partir de la première zone de stockage après la réception du message de requête de nombre pseudo-aléatoire à entropie complète ; et
lire de manière aléatoire les troisièmes données binaires à partir de la seconde zone de stockage après la réception du message de requête de nombre pseudo-aléatoire à entropie réduite.

5. Appareil de génération de nombres aléatoires selon l'une quelconque des revendications 1 à 4, dans lequel le module de génération d'entropie comprend un convertisseur analogique-numérique et un second circuit opérationnel ;
le convertisseur analogique-numérique est configuré pour convertir le signal ENF d'un signal analogique en un signal numérique ; et le second circuit opérationnel est configuré pour réaliser une opération sur le signal ENF qui est converti en signal numérique, afin d'obtenir les premières données binaires.

6. Appareil de génération de nombres aléatoires selon la revendication 5, dans lequel le module de génération d'entropie comprend également un circuit de prétraitement, et le circuit de prétraitement est connecté séparément à l'extracteur ENF et au convertisseur analogique-numérique ; et
le circuit de prétraitement est configuré pour prétraiter le signal ENF et transmettre le signal ENF prétraité au convertisseur analogique-numérique.

7. Appareil de génération de nombres aléatoires selon la revendication 6, dans lequel le circuit de prétraitement est également configuré pour :
détecter une qualité de signal du signal ENF ; et
continuer ou arrêter, sur la base de la qualité de signal du signal ENF, la transmission du signal ENF au convertisseur analogique-numérique.

8. Procédé de génération de nombres aléatoires, comprenant :
l'obtention d'au moins un élément de données d'entrée, dans lequel l'au moins un élément de données d'entrée comprend des premières données binaires, et les premières données binaires sont générées sur la base d'un signal de fréquence de réseau électrique (ENF) ; et
la génération d'un nombre aléatoire sur la base de l'au moins un élément de données d'entrée ;
dans lequel la génération d'un nombre aléatoire sur la base de l'au moins un élément de données d'entrée comprend :
la génération de deuxièmes données binaires sur la base des premières données binaires ; et
la réalisation d'une opération OU exclusif sur les premières données binaires actuelles et les deuxièmes données binaires, afin de générer le premier nombre aléatoire, dans lequel le premier nombre aléatoire est un véritable nombre aléatoire.

9. Procédé de génération de nombres aléatoires selon la revendication 8, dans lequel la génération de deuxièmes données binaires sur la base des premières données binaires comprend :
la génération de manière correspondante d'au moins un élément de troisièmes données binaires sur la base de l'au moins un élément de données d'entrée, dans lequel l'au moins un élément de troisièmes données binaires comprend les deuxièmes données binaires ; et
après la génération de manière correspondante d'au moins un élément de troisièmes données binaires sur la base de l'au moins un élément de données d'entrée, le procédé comprend également :
le stockage de l'au moins un élément de troisièmes données binaires ; et
la lecture de manière aléatoire de troisièmes données binaires à partir de l'au moins un élément de troisièmes données binaires stockées après la réception d'un message de requête de nombre pseudo-aléatoire, et la production d'un second nombre aléatoire sur la base des troisièmes données binaires lues de manière aléatoire, dans lequel le second nombre aléatoire est un nombre pseudo-aléatoire.

10. Procédé de génération de nombres aléatoires selon la revendication 9, dans lequel le stockage de l'au moins un élément de troisièmes données binaires comprend :
sur la base d'un taux d'entropie correspondant à l'au moins un élément de troisièmes données binaires, le stockage de troisièmes données binaires qui sont dans l'au moins un élément de troisièmes données binaires et qui ont un taux d'entropie supérieur à un premier seuil dans une première zone de stockage, et le stockage de troisièmes données binaires qui sont dans l'au moins un élément de troisièmes données binaires et qui ont un taux d'entropie non supérieur au premier seuil dans une seconde zone de stockage.

11. Procédé de génération de nombres aléatoires selon la revendication 10, dans lequel le message de requête de nombre pseudo-aléatoire comprend un message de requête de nombre pseudo-aléatoire à entropie complète et un message de requête de nombre pseudo-aléatoire à entropie réduite ; et
la lecture de manière aléatoire de troisièmes données binaires à partir de l'au moins un élément de troisièmes données binaires stockées après la réception d'un message de requête de nombre pseudo-aléatoire comprend :
la lecture de manière aléatoire des troisièmes données binaires à partir de la première zone de stockage après la réception du message de requête de nombre pseudo-aléatoire à entropie complète ; et
la lecture de manière aléatoire des troisièmes données binaires à partir de la seconde zone de stockage après la réception du message de requête de nombre pseudo-aléatoire à entropie réduite.

12. Procédé de génération de nombres aléatoires selon l'une quelconque des revendications 8 à 11, dans lequel, avant l'obtention d'au moins un élément de données d'entrée, le procédé comprend également :
la conversion du signal ENF d'un signal analogique en un signal numérique ; et
la réalisation d'une opération sur le signal ENF qui est converti en signal numérique, afin d'obtenir les premières données binaires.

13. Procédé de génération de nombres aléatoires selon la revendication 12, dans lequel, avant la conversion du signal ENF d'un signal analogique en un signal numérique, le procédé comprend également :
le prétraitement du signal ENF.

14. Procédé de génération de nombres aléatoires selon la revendication 13, dans lequel, avant la conversion du signal ENF d'un signal analogique en un signal numérique, le procédé comprend également :
la détection d'une qualité de signal du signal ENF ; et
la poursuite ou l'arrêt, sur la base de la qualité de signal du signal ENF, de la conversion du signal ENF d'un signal analogique en un signal numérique.

15. Dispositif électronique comprenant un appareil de génération de nombres aléatoires selon l'une quelconque des revendications 1 à 7, dans lequel le dispositif électronique est l'un des suivants :
un véhicule ;
un dispositif de l'Internet des objets, IoT ; ou
un dispositif domotique.
